**Europäisches Patentamt**

**European Patent Office** (11) Veröffentlichungsnummer: **0 089 079**

**Office européen des brevets** **B1**

(12) **EUROPÄISCHE PATENTSCHRIFT**

(45) Veröffentlichungstag der Patentschrift: (51) Int. Cl.⁴: **G 01 N 21/74**
**14.10.87**

(21) Anmeldenummer: **83200308.1**

(22) Anmeldetag: **02.03.83**

(54) Küvette für die Atomabsorptionsspektrometrie.

(30) Priorität: **11.03.82 DE 3208744** (73) Patentinhaber: **Philips Patentverwaltung GmbH, Wendenstrasse 35 Postfach 10 51 49, D-2000 Hamburg 1 (DE)**

(43) Veröffentlichungstag der Anmeldung: (84) Benannte Vertragsstaaten: **DE**
**21.09.83 Patentblatt 83/38**
(73) Patentinhaber: **N.V. Philips' Gloeilampenfabrieken, Groenewoudseweg 1, NL- 5621 BA Eindhoven (NL)**
(45) Bekanntmachung des Hinweises auf die Patenterteilung: (84) Benannte Vertragsstaaten: **CH FR GB LI AT**
**14.10.87 Patentblatt 87/42**

(72) Erfinder: **Lersmacher, Bernhard, Dr., Schlossweiherstrasse 31, D-5100 Aachen (DE)**
(84) Benannte Vertragsstaaten: Erfinder: **Knippenberg, Wilhelmus Franziskus, Dr., Antoon Koolenlaan 11, NL- Aalst (NL)**
**AT CH DE FR GB LI**

(56) Entgegenhaltungen: (74) Vertreter: **Piegler, Harald, Dipl.- Chem., Philips**
**EP-A-0 030 405** **Patentverwaltung GmbH Wendenstrasse 35**
**EP-A-0 088 475** **Postfach 10 51 49, D-2000 Hamburg 1 (DE)**
**DE-A-2 221 184**
**DE-U-7 137 044**
**GB-A-2 064 500**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

### Beschreibung

Die Erfindung betrifft eine Küvette für die Atomabsorptionsspektrometrie (AAS), bestehend aus einem Rohr und flanschförmigen oder flanschähnlichen Teilen aus Elektrographit, glasartigem Kohlenstoff oder hochschmelzenden Metallen, die an den Rohrenden oder in deren Nähe fest mit dem Rohr verbunden sind.

Die flanschförmigen oder flanschähnlichen Teile werden nachfolgend auch kurz ""Flansche"" oder ""Kontaktringe"" genannt.

Eine derartige Küvette ist aus DE-A-2 221 184 bekannt. Bei dieser Küvette bestehen die flanchförmigen Teile und das Rohr aus Elektrographit. Die Küvette wird mit elektrischem Strom aufgeheizt, indem der elektrische Strom den Rohrenden im wesentlichen in radialer Richtung von außen her über die flanschförmigen oder flanschähnlichen Teile zugeführt wird, die insbesondere in ihrer Dicke und Dickenverteilung so gestaltet sind, daß in ihnen selbst noch soviel Wärme erzeugt wird und ihre Wärmeleitfähigkeit so klein ist, daß eine Abkühlung der Rohrenden in ausreichendem Ausmaß verhindert wird. Die Flansche sind entweder fest mit dem Rohr verbunden, so daß Flansche und Rohr eine einzige zusammenhängende Baueinheit darstellen, oder Flansche und Rohr sind mechanisch getrennte Einzelteile, die sich an den Rohrenden an Kontaktflächen berühren.

Aus DE-U-7 137 044 ist eine Küvette bekannt, die aus einem Graphitrohr besteht, dessen Enden als Ringflansche ausgebildet sind. Auch hier stellen Flansche und Rohr eine einzige zusammenhängende Baueinheit dar.

Aus EP-A-0 030 405 ist es bekannt, rohrförmige Küvetten, die aus Graphit, insbesondere Elektrographit, oder mikroporösem glasartigem Kohlenstoff bestehen, mit pyrolytischem Graphit - nachfolgend auch Pyrographit genannt - zu beschichten. Ein ähnliches Beschichtungsverfahren ist aus GB-A-2 064 500 bekannt, wobei die Küvetten aus pyrolytischem Graphit bestehen.

Die Erfindung schließt insbesondere an den neuartigen Küvettentyp an, der in dem unter Artikel 54(3) EPÜ fallenden Dokument EP-A-0 088 475 beschrieben ist. Es handelt sich dort um eine ausschließlich aus pyrolytischem Graphit bestehende Form, die durch besonders geringe Wandstärken von 50 bis 1000 µm, vorzugsweise 100 bis 300 µm, und damit auch durch eine äußerst geringe thermisch-träge Masse gekennzeichnet ist. Der Gebrauch derartig dünnwandiger Röhrchen birgt gewisse Probleme hinsichtlich der Kontaktierung mit den Stromzuführungen des AAS-Gerätes. Die Schwierigkeit besteht darin, gute, d.h. über den gesamten Umfang des Küvettenrohres gleichförmige Klemmkontakte mit reproduzierbaren Übergangswiderständen zu realisieren. Eine solche möglichst gute Reproduzierbarkeit ist aber von erheblichem Einfluß auf den Ablauf und damit auf das Ergebnis einer AAS-Analyse sowie für die Handhabung der Küvetten in AAS-Geräten.

Bei sehr dünnwandigen Küvetten ist bei Kontaktierung von der Stirnseite her der Kontakt selbst praktisch eine kreisförmige Linie. Dies hat einerseits gewisse Vorzüge, da die Wärmeableitung aus der Küvette in die - meistens gekühlten - Kontaktstücke des Gerätes hinein sehr gering gehalten und damit eine sehr homogene Temperaturverteilung über die Küvettenlänge mit sehr steilen Temperaturgradienten an den Küvettenenden erreicht werden kann. Andererseits setzen die vorhin erwähnten Schwierigkeiten einer reproduzierbaren Kontaktierung voraus, daß die Küvetten selbst äußerst präzise bearbeitet werden und bei der Einführung in das AAS-Gerät sehr sorgfältig gehandhabt werden mussen.

Es leuchtet ein, daß die geschilderten Kontaktierungsprobleme weitgehend vermindert werden können, wenn massivere Kontakte verwendet werden. Letzteres läßt sich im Prinzip auf zwei Wegen erreichen, nämlich entweder durch größere Wanddicken der Rohre oder durch Verwendung von Rohren mit verdickten Enden in Form von wulst- oder flanschartigen Kontakten.

Die Möglichkeit größerer Wanddicken, die bei Küvetten aus Elektrographit wegen der notwendigerweise größeren Wandstärken ohnehin üblich ist, läßt sich grundsätzlich auch bei Pyrographit anwenden. Allerdings sind dickwandige Küvetten aus diesem Material sehr teuer (mindestens um einen Faktor 10 teurer als die inzwischen handelsüblichen beschichteten Küvetten) und außerdem gingen die Vorzüge der in EP-A-0 088 475 beschriebenen ""quick-action""- bzw. "low-mass"-Küvette verloren.

Die Variante mit Flanschen wird bei Küvetten aus "normalem" Graphit bereits praktiziert, beispielsweise bei dem aus DE-A- 2 221 184 bekannten Küvettentyp. Es ist im Prinzip zwar möglich, Küvetten aus pyrolytischem Graphit mit flanschartigen Enden unmittelbar durch Abscheiden aus der Gasphase auf geeignet geformten Dornen herzustellen, jedoch wäre ein solches Verfahren äußerst kostspielig, da es u.a. sehr komplizierte mehrteilige Substratkörper, die nach der Beschichtung mit pyrolytischem Graphit aus der Umhüllung herausnehmbar (entformbar) sind, und außerdem aufwendige Nachbearbeitungsmaßnahmen erfordert.

Der Erfindung liegt die Aufgabe zugrunde, eine technisch einwandfreie und ökonomisch vertretbare Lösung der angesprochenen Probleme anzugeben.

Diese Aufgabe wird erfindungsgemäß dadurch gelöst, daß bei einer Küvette der eingangs genannten Art das Rohr aus pyrolytischem Graphit besteht und daß das Rohr und die flanschförmigen oder flanschähnlichen Teile durch eine gemeinsame Umhüllung aus pyrolytischem Graphit miteinander verbunden sind.

Weitere Ausgestaltungen der Erfindung sind den abhängigen Ansprüchen zu entnehmen.

Die Erfindung wird anhand einer Zeichnung und einiger Ausführungsbeispiele näher erläutert. In der Zeichnung zeigen

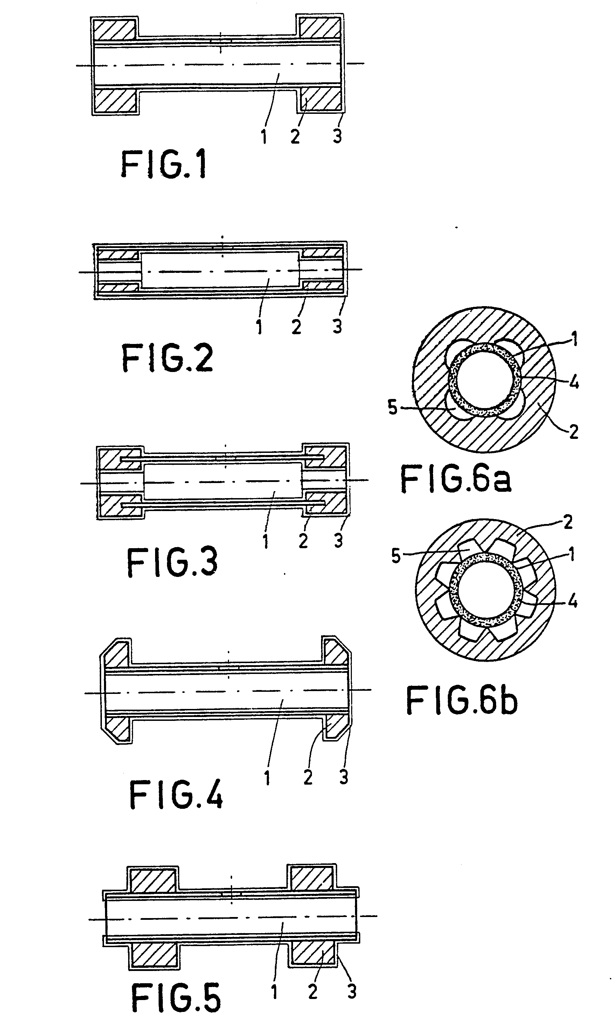

Fig. 1 bis 5 einige Küvetten im Längsschnitt und Fig. 6a und 6b Seitenansichten von Küvetten mit besonders geformten Kontaktringen.

In den Figuren ist ein Basisrohr 1 aus pyrolytischem Graphit dargestellt, an dessen Enden Kontaktringe 2 aus Elektrographit angeordnet sind. Das Ganze ist mit einer Umhüllung 3 aus pyrolytischem Graphit bedeckt.

In Fig. 1 ist eine Küvette mit Außenringen, in Fig. 2 eine Küvette mit Innenringen, in Fig. 3 eine Küvette mit aufgesteckten Ringen und in Fig. 4 eine Küvette mit abgeschrägten Kontaktflächen dargestellt. Bei der Küvette nach Fig. 5 sind die Ringe von den Rohrenden weg zur Rohrmitte hin verschoben. Die unterschiedlichen Formen und die Anordnungen der Verstärkungs- und Kontaktringe ermöglichen eine optimale Anpassung an die jeweilige Kontaktierungsvorrichtung des AAS-Gerätes.

Bei der Herstellung der erfindungsgemäßen Küvette werden in einem 1. Abschnitt nach bekannten Methoden Rohre aus pyrolytischem Graphit hergestellt und gemäß den in EP-A-0 088 475 gegebenen Anweisungen zu Küvetten mit Wanddicken von 50 bis 1000 μm, vorzugsweise 100 bis 300 μm, weiterverarbeitet. In einem separaten Arbeitsgang (2. Abschnitt des Verfahrens) werden Ringe aus Elektrographit hergestellt. Andere Materialien sind Festkohlenstoffe, vorzugsweise glasartiger Kohlenstoff in massiver und auch poröser Form, sowie - in Ausnahmefällen - hochschmelzende Metalle wie Molybdän, Wolfram, Tantal u.a.. Die Abmessungen dieser Kontaktringe müssen so mit den Abmessungen der Küvettenrohre abgestimmt werden, daß sich die beiden Komponenten gemäß den Darstellungen in Fig. 1 bis 5 zusammenfügen lassen, und zwar so, daß ein gewisser Klemmsitz gewährleistet ist, so daß keine besonderen Zusatzmaßnahmen zur Befestigung erforderlich sind. Es hat sich gezeigt, daß dies infolge der guten Bearbeitbarkeit der beiden Werkstoffe (Graphit, Pyrographit) sehr gut zu machen ist.

Die Fig. 6a und 6b zeigen, daß die Verstärkungs- und Kontaktierungsringe bezüglich ihres Profils bzw. ihrer Gestalt weitestgehend modifiziert werden können. Beispielsweise können sie so gestaltet werden, daß sie nur an einigen Stellen 4 punkt- oder flächenförmig auf dem Basisrohr 1 aufsitzen. Solche durch Durchbrüche 5 unterbrochenen Kontakte ermöglichen in gewissen Grenzen eine Beeinflussung des Strom- und Wärmeflusses und damit eine Homogenisierung des Temperaturprofils über die Küvettenlänge im Sinne steilerer Temperaturgradienten an den Küvettenenden.

Nach Zusammenfügen der einzelnen Komponenten wird mindestens eine weitere Beschichtung mit pyrolytischem Graphit vorgenommen (3. Abschnitt des Verfahrens). Die dabei entstehende allseitig umhüllende Schicht bindet die Teile zu einem Körper, nämlich zu einer Küvette mit festen Kontaktierungsflanschen, zusammen und hat außerdem noch den Effekt einer Versiegelung der gesamten Oberfläche zur Folge. Die mit der Zweitbeschichtung zwangsläufig verbundene allseitige Oberflächenversiegelung entspricht dem in GB-A-2 064 500 erläuterten Konzept einer angestrebten Passivierung der bearbeiteten Küvette. Dieser Passivierungseffekt bewirkt im allgemeinen eine Erhöhung der Lebensdauer. Wie in EP-A-0 088 475 beschrieben, ist jedoch auch der Fall einer durch Bearbeitung aktivierten Küvettenoberfläche vielfach wünschenswert. Es ist jeweils eine Frage der benötigten Mindestlebensdauer (Anzahl der Erhitzungen) oder aber der erhöhten Reaktivität, ob die Zweitschicht auf der Küvetteninnenseite durch Abschleifen zu entfernen ist. In diesem Falle erhält man einen neuartigen Typ einer Flanschküvette mit aktivierter innerer und passivierter äußerer Oberfläche. Die so hergestellte Küvette läßt sich auch als Verbundküvette bezeichnen bzw. charakterisieren.

**Beispiel**

In einem bekannten Verfahren wurden aus einem kohlenwasserstoffhalten Gas Pyrographitschichten auf zylindrischen Vollstäben aus Elektrographit von 4,9 mm Durchmesser abgeschieden. Nach Abkühlung und Entnahme aus dem CVD-Reaktor konnten die Substratstäbe und die Umhüllungen voneinander getrennt werden. Letztere hatten die Form dünnwandiger Röhrchen von 5 mm Innendurchmesser und etwa 5,5 mm Außendurchmesser, also einer Wandstärke von etwa 250 μm. Die Röhrchen wurden mittels Schneiden, Schleifen und Bohren zu Küvetten von 28 mm Länge und 5,4 mm Außendurchmesser, also 200 μm Wandstärke, weiterverarbeitet. In einem separaten Arbeitsgang wurden Ringe aus hochreinem Elektrographit von 5,4 (± 0,01 bis 0,02) mm Innendurchmesser, 1,5 mm Breite und 1,0 mm Dicke angefertigt. Diese Ringe ließen sich eng passend auf die Küvettenenden aufschieben.

Der Verbund der Teile miteinander wurde in einem Nachbeschichtungsgang vorgenommen. Es hat sich gezeigt, daß eine 1 bis 100 μm, vorzugsweise 10 μm starke umhüllende und verbindende Schicht aus pyrolytischem Graphit für Küvetten der genannten Abmessungen sowohl elektrisch als auch mechanisch ausreichend ist. Der gesamte elektrische Widerstand, gemessen über die Länge, betrug etwa 0,1 Ohm.

Die Kontaktringe bewirken - neben ihrer elektrischen Funktion - einen weiteren Effekt: Häufig verziehen sich die sehr dünnwandigen Küvettenröhrchen infolge innerer Spannungen, die sich im anisotropen pyrolytischen Graphit bei der Abkühlung aufbauen. Die Röhrchen werden unrund und können gelegentlich platzen oder einreißen. Diese Deformationen werden durch Anbringen der Kontaktringe kompensiert und die Küvette wird mechanisch stabilisiert. Die hauptsächliche und wesentliche Wirkung ist jedoch darin zu sehen, daß die Kontaktringe eine homogene Einspeisung des Heizstromes und dadurch eine homogene Temperaturverteilung über den Umfang und damit auch über die Länge des Küvettenrohres gewährleisten.

Ein Entfernen von Teilen der äußeren pyrolytischen Graphitschichten, so daß die Umhüllung beispielsweise an den mit den Gerätekontakten in Berührung kommenden Flächen Unterbrechungen aufweist, bietet eine Möglichkeit, die Kontaktwiderstände und den Wärmefluß in gewissen Grenzen zu modifizieren.

Die nachträgliche Entfernung der Zweitschicht an der Küvetteninnenwand (beispielsweise durch Schleifen) hebt die mit der Nachbeschichtung bewirkte Passivierung selektiv wieder auf und erhöht somit das Reduktionspotential in dem Bereich, in dem die Analysenprobe eingebracht wird.

Zusammenfassend sei bemerkt, daß die erfindungsgemäße Küvette einen dünnwandigen Grundkörper aus pyrolytischem Graphit hat, der an den Enden mit Flanschen versehen ist. Diese Teile werden mittels einer umhüllenden Pyrographitschicht zu einer Einheit verbunden. Die so hergestellte Flanschküvette ist einfach zu kontaktieren und mechanisch stabilisiert. Die Vorzüge einer "low-mass, quick-action"-Küvette bleiben auch bei diesem Küvettentyp weitestgehend erhalten. Die Herstellung der Küvette ist technisch einfach und kostengünstig.

**Patentansprüche**

1. Küvette für die Atomabsorptionsspektrometrie, bestehend aus einem Rohr und flanschförmigen oder flanschähnlichen Teilen aus Elektrographit, glasartigem Kohlenstoff oder hochschmelzenden Metallen, die an den Rohrenden oder in deren Nähe fest mit dem Rohr verbunden sind, bei der das Rohr (1) aus pyrolytischem Graphit besteht und daß das Rohr (1) und die flanschförmigen oder flanschähnlichen Teile (2) durch eine gemeinsame Umhüllung (3) aus pyrolytischem Graphit miteinander verbunden sind.

2. Küvette nach Anspruch 1, bei der das Rohr (1) eine Wanddicke von 50 bis 1000 µm, vorzugsweise 100 bis 300 µm, hat.

3. Küvette nach Anspruch 1 oder 2, bei der die flanschförmigen oder flanschähnlichen Teile (2) derart gestaltet sind, daß sie nur an einigen Stellen (4) punkt- oder flächenförmig auf dem Rohr (1) aufsitzen.

4. Küvette nach einem oder mehreren der Ansprüche 1 bis 3, bei der die Umhüllung (3) 1 bis 100 µm, vorzugsweise 100 µm, dick ist.

5. Küvette nach einem oder mehreren der Ansprüche 1 bis 4, bei der die Umhüllung (3) Unterbrechungen aufweist.

6. Küvette nach einem oder mehreren der Ansprüche 1 bis 5, bei der die Umhüllung (3) auf der Innenwand des Rohres (1) entfernt worden ist.

**Claims**

1. A cuvette for atomic absorption spectroscopy consisting of a tube and flange-shaped or flange-like parts of electrographite, vitreous carbon or high-melting-point metals which are rigidly bonded to the tube at the ends of the tube or in the proximity thereof, in which the tube (1) consists of pyrolitic graphite and the tube (1) and the flange-shaped or flange-like parts (2) are bonded a common envelope (3) of pyrolytic graphite.

2. A cuvette as claimed in Claim 1, in which the tube (1) has a wall thickness from 50 µm to 1000 µm, preferably from 100 µm to 300 µm.

3. A cuvette as claimed im Claim 1 or 2, in which the flange-shaped or flange-like parts (2) are formed so as to engage the tube (1) only in a few points (4) in the form of a point or an area.

4. A cuvette as claimed in one or more of the Claims 1 to 3, in which the envelope (3) is from 1 µm to 100 µm, preferably 10 µm thick.

5. A cuvette as claimed in one or more of the Claims 1 to 5, in which the envelope (3) has interruptions.

6. A cuvette as claimed in one or more of the Claims 1 to 5, in which the envelope (3) on the inner wall of the tube (1) has been removed.

**Revendications**

1. Cuvette pour la spectroscopie par absorption atomique, constituée par un tube et des parties en forme de flasque ou ressemblant à des flasques en électrographite, carbone vitreux ou métaux à point de fusion élevés, qui sont fixées aux extrémités au tube aux extrémités de ce dernier ou dans leur proximité des extrémités, dans laquelle le tube (1) est constitué par du graphite pyrolytique et le tube (1) et les parties (2) en forne de flasque ou ressemblant à des flasques sont assemblées par une enveloppe commune (3) en graphite pyrolytique.

2. Cuvette selon la revendication 1, dans laquelle le tube (1) présente une épaisseur de paroi de 50 à 1000 µm, de préférence de 100 à 300 µm.

3. Cuvette selon la revendication 1 ou 2, dans laquelle les parties (2) en forme de flasque ou ressemblant à des flasques sont formées de façon à ne reposer qu'à quelques endroits (4), sous forme de points ou de faces sur le tube (1).

4. Cuvette selon une ou plusieurs des revendications 1 à 3, dans laquelle l'enveloppe (3) est d'une épaisseur de 1 à 100 μm, de préférence de 10 μm.

5. Cuvette selon l'une ou plusieurs des revendications 1 à 4, dans laquelle l'enveloppe (3) présente des interruptions.

6. Cuvette selon l'une ou plusieurs des revendications 1 à 5, dans laquelle l'enveloppe (3) doit être enlevée de la paroi intérieure du tube (1).

0 089 079

FIG.1

FIG.2

FIG.6a

FIG.3

FIG.6b

FIG.4

FIG.5